# EUROPEAN PATENT APPLICATION

(11) **EP 2 180 410 A1**
(43) Date of publication of application: **28.04.2010**
(21) Application number: 08305738.0
(22) Date of filing: 27.10.2008
(51) Int. Cl.: G06F 13/38

(54) **USB device able to automatically adapt to USB capability of a connected host**

(71) Applicant: Gemalto SA, 92190 Meudon (FR)
(72) Inventor: Charbonnier, Sylvain, 13013, MARSEILLE (FR)

(57) **Abstract**

The invention is a USB device intended to be connected to a host machine. The USB device may be set into first and second communication modes. The USB device comprises a communication interface able to manage a D+ line, a non volatile memory intended to comprise a preset duration, a timer, and first means capable of activating a first pull up resistor on the D+ line when the USB device is set to the first communication mode. The USB device comprises second, third and fourth means. The second means capable of starting the timer when a USB reset is detected on the D+ line. The third means is capable of switching the USB device to the second communication mode when the timer reaches the preset duration. The fourth means is able to activate a second pull up resistor on the D+ line when the USB device is set to said second communication mode.

## Description

### (Field of the invention)

The present invention relates to Universal Serial Bus, also called USB. It relates particularly to USB devices capable of automatically adapting to USB capability of the connected host.

### (Prior art)

The Universal Serial Bus Specification, Revision 2.0, April 27, 2000 is the product of a consortium of companies. The document defines an industry- standard Universal Serial Bus and describes the bus attributes, the protocol definition, types of transactions, bus management, and the programming interface required to design and build systems and peripherals that are compliant with this standard.

The USB is a cable bus that supports data exchange between a host computer and a wide range of simultaneously accessible peripherals. The attached peripherals share USB bandwidth through a host-scheduled, token based protocol. The bus allows peripherals to be attached, configured, used, and detached while the host and other peripherals are in operation.

The USB transfers signal and power over a four-wire cable. The cable carries Vbus and ground wires to deliver power to devices.

A USB host detects that a device has been attached to one of its ports by monitoring the differential data lines, after power has been applied to the port. When no device is attached to a host USB port, from 14.25 KΩ to 24.80 KΩ pull-down resistors on the D+ and D- lines ensure that both data lines are near ground. Full speed USB devices must include a pull-up resistor on D+. When a device is attached to a host USB port, electric current flows on the D+ line across the voltage divider created by the host pull-down resistor and the device pull-up resistor. Since the pull-down resistor value is from 14.25 KΩ to 24.80 KΩ and the device pull-up resistor is a value from 900Ω to 1.575 KΩ, a data line will rise more than 90% of Vbus. When the host detects that the D+ line approaches Vbus, it detects that a device has been attached. In the case of an attachment, the host enables the port and addresses the USB device through the device control pipe at the default address. The host assigns a unique USB address to the device.

D+ is a differential signal. The D+ line is the bus where the data communication takes place.

When the D+ line falls below a preset value (for example 0.8 volt) during a preset value (for example 2.5 milliseconds) the host detects a device detachment. When the D+ line rises above a preset value (for example 2.0 volts) for longer than a preset duration (for example 2.5 milliseconds) the host recognizes a device attachment. The device must then remain idle for greater than 2 milliseconds. The Host polls each port periodically to check for device attachment and detachment.

In order to work with a telecom handset, a USB device must comply with USB-InterChip supplement to USB 2.0 specification. In order to work with a Personal Computer, a USB device must comply with USB2.0 standard requirements. According to chapter 7 of USB2.0 standard, Vbus is equal to 5 volt. According to USB-InterChip supplement, Vbus may be comprised in the range 1 volt to 3 volt and a specific pull up resistor must be set to 60 KΩ on the D+ line when an USB reset is performed by Host and detected by the USB device. A problem is to be able to use a USB device with both a Telecom handset and a Personal Computer. When a USB device compliant with USB-InterChip is plugged to a Personal Computer, the pull up resistor equal to 60 KΩ is activated on the D+ line. As a consequence the Personal Computer interprets the resulting D+ line level as a detachment of the USB device. Thus a USB device compliant with USB-InterChip is not functional when plugged to a Personal Computer. In particular there is a need to have a Universal Integrated Circuit Card (UICC according to smart card Telecom standards) which can be equally connected to a handset and to a Personal Computer.

### (Summary of the Invention)

An object of the invention is to solve the above mentioned technical problem. In accordance with the principles of the invention, a USB device plugged to a host is capable of detecting whether it is connected to a USB 2.0 or a USB-InterChip host. According to the invention the USB device plugged to a host is capable of automatically switching between a first configuration in which the device complies with USB-InterChip standard requirements, and a second configuration in which the device complies with USB 2.0 standard requirements.

The object of the present invention is a USB device intended to be connected to a host machine. The USB device is intended to be in first and second communication modes and comprises a microprocessor, a timer, and a communication interface able to manage a Vbus line, a D+ and/or a D- line. The USB device comprises an operating system, a working memory, and a non volatile memory intended to comprise a preset duration. The USB device comprises first, second, third and fourth means. The first means capable of activating a first pull up resistor on said D+ or D- line when the USB device is set to the first communication mode. The second means is capable of starting the timer when a USB reset is detected on the D+ or D- line. The third means is capable of switching the USB device to the second communication mode when the timer reaches the preset duration. The fourth means is capable of activating a second pull up resistor on said D+ or D-line when the USB device is set to the second communication mode.

Advantageously, the USB device may comprise a fifth means capable of stopping the timer when a USB descriptor is detected on the D+ line.

In a preferred embodiment, the first communication mode may correspond to USB-InterChip standard and the second communication mode may correspond to USB 2.0 standard.

The USB device may have a default mode corresponding to the first communication mode.

Advantageously, the USB device may be a Universal integrated Circuit Card.

Another object of the invention is a method of managing a USB device comprising a preset duration, a timer and a communication interface capable of managing a Vbus line and a D+ and / or D- line. The method comprises the following steps:
- when a USB Reset is detected on the D+ or D-line, activating a first pull up resistor on said D+ or D- line if the USB device is set to a first communication mode,
- when a USB Reset is detected on the D+ or D-line, starting the timer,
- switching the USB device to a second communication mode when the timer reaches the preset duration,
- when a USB Reset is detected on the D+ or D-line, activating a second pull up resistor on said D+ or D- line if the USB device is set to said second communication mode.

Advantageously, the method may comprise the further step of stopping the timer when a USB descriptor is detected on D+ or D- line.

The first communication mode may correspond to USB-InterChip standard and the second communication mode may correspond to USB 2.0 standard.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a first embodiment of a portable USB device according to the invention; and
- Figure 2 depicts schematically an example of a step sequence allowing the automatic switching from first communication interface settings to second communication interface settings for a USB device according to the invention.

### (Detailed description of the preferred embodiments)

The invention may apply to any types of USB devices intended to be used with both hosts compliant with USB 2.0 standard and hosts compliant with USB-InterChip standards. The invention may also apply to USB devices intended to be used with hosts compliant with further release of the above referenced two standards which would keep the same kind of requirements on D+ line and on D- line.

An advantage of the invention is to provide a USB device which may be used with currently existing hosts without any change on host side. The invention avoids requiring a new USB reader which is compliant with the two targeted standards. Such a reader is costly and requires a heavy management to be deployed on the field.

Since the invention does not detect USB Host type only with Vbus difference between USB2.0 and USB-InterChip, the invention has the two following advantages. First the invention avoids powering the USB device memory with a Vbus equal to 5 volt. Such a power supply may destroy a NAND memory for example. Secondly the invention provides a solution allowing the USB device to work with any kinds of handset, in particular with handsets which do not comply with a dynamic voltage selection.

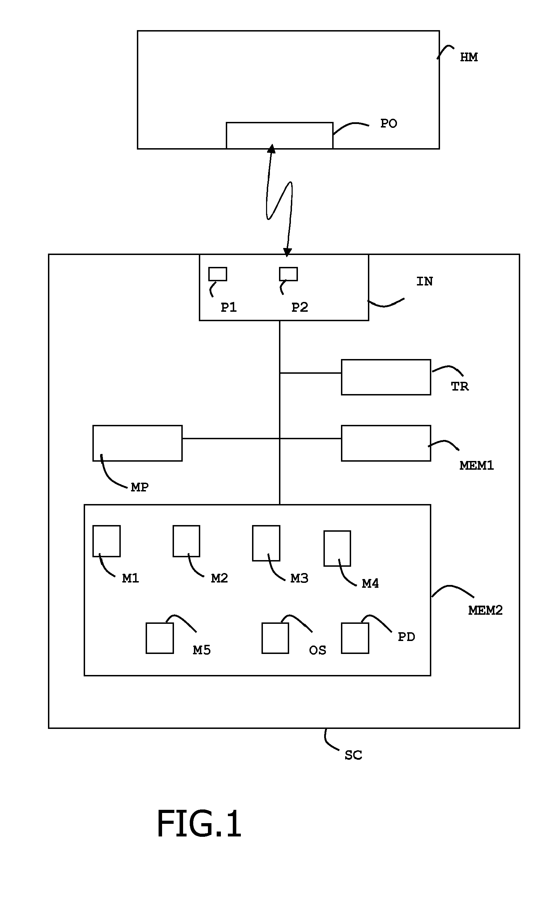

**Figure 1** shows the architecture of a portable USB device SC according to a first embodiment of the invention. In this example, the USB device SC is a SIM smart card intended to be connected to a personal computer HM via a USB port PO.

The USB device SC comprises a working memory MEM1 of RAM type, a non volatile memory MEM2, a microprocessor MP, a communication interface IN and a timer TR.

The portable electronic device SC is intended to exchange data according to USB standards through the communication interface IN.

The USB device SC comprises an operating system OS. The non volatile memory MEM2 may be NAND flash or EEPROM memory. The non volatile memory MEM2 is intended to store a preset duration PD.

The USB device SC comprises five means. The first means M1 is able to activate a first pull up resistor P1 on the D+ line. The second means M2 is able to start the timer TR when a USB reset is detected on the D+ line. The third means M3 is able to switch the communication mode of the USB device SC from USB-InterChip settings to USB 2.0 settings. The fourth means M4 is able to activate a second pull up resistor P2 on the D+ line. The fifth means M5 is able to stop the timer TR when a USB descriptor is detected on D+ line. A USB request contains a USB descriptor. When the host sends a USB request to the USB device SC, a USB descriptor is present on D+.

In the above described example the five means M1 to M5 are shown as five distinct elements having each one a specific function. These five elements may be merged in one or several hardware or software elements. The present invention may be implemented with any combinations of one or several elements providing the five functions.

In a preferred embodiment, the USB device SC is able to communicate in USB full-speed mode through the communication interface IN.

Alternatively, the USB device SC may be able to communicate in USB low-speed mode through the communication interface IN. In this case, the pull-up resistor P1 should be activated on the D- line by the first means M1. The fourth means M4 is able to activate a second pull up resistor P2 on the D- line and the fifth means M5 is able to stop the timer TR when a USB descriptor is detected on D- line

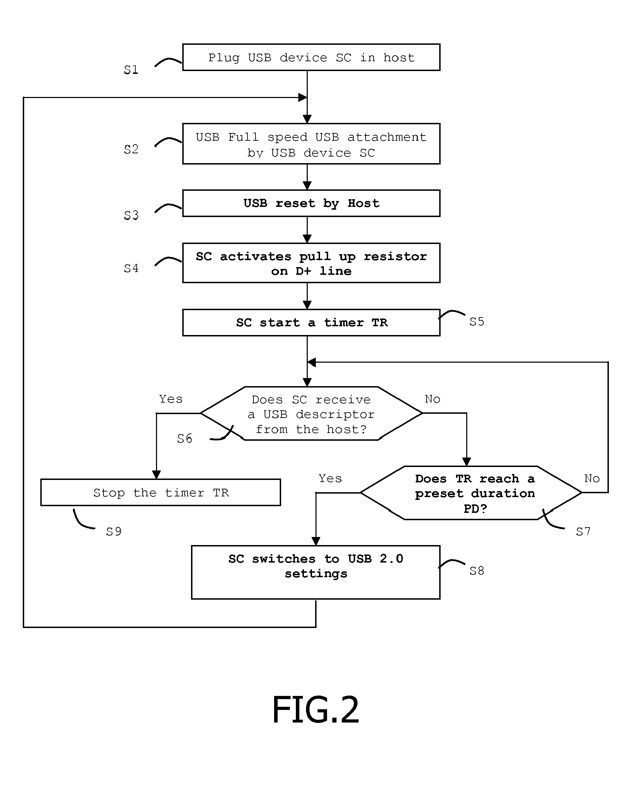

**Figure 2** is a flow chart showing a method for automatically switching a USB device SC from first communication interface settings to second communication interface settings.

The USB device SC is assumed to have default communication settings corresponding to USB-InterChip standard. At a first step S1, the USB device SC is plugged into the host machine HM compliant with USB 2.0 standard. In this example, the host machine is a personal computer. The host machine may be any host providing USB host features of USB 2.0 standard. Then at step S2, the device SC generates a USB attachment on the D+ line through the communication interface IN by connecting pull up P1. The corresponding change of voltage on D+ line trigs a USB Reset on the host machine HM side. The host machine HM sets the D+ line to a low level at step S3. When the device SC detects the Reset on D+ or D- line, a pull up resistor P2 is activated on the device SD side at step S4 and a timer TR is started on the device SC side at step S5. The equivalent pull up resistor P1+P2 is activated on the D+ line. The equivalent pull up resistor P1+P2 corresponds to the default communication settings. Thus the P1+P2 value is 60 KΩ corresponding to the USB-InterChip standard. As a consequence, the host detects a detachment of the device SC. An important point is that the personal computer keeps the Vbus unchanged even if the device SC has been considered as detached. After step S5, the device SC enters a loop that can be stopped by two kinds of events: the receipt of a USB descriptor coming from the host machine HM or a timeout. Thus at step S6, the device checks if a USB descriptor has been received from the connected host machine HM. If no USB descriptor has been received, the device SC compares the timer TR with a preset duration PD at step S7. In a preferred embodiment the preset duration PD is equal to 2 seconds. Alternatively, the preset duration PD may be in the range [1s, ..., 3s].

If the timer TR did not reach the preset duration PD at step S7, the device SC comes back to step S6. If a USB descriptor has been received at step S6, the timer TR is stopped at step S9.

If the timer TR reached the preset duration PD, the communication settings are switched to USB 2.0 standard at step S8. In particular, the change of communication settings corresponds to the selection of a second pull up resistor P2 intended to be used on the line D+. The value of the second pull up resistor P2 should be in the range 900Ω to 1575Ω. Then the device SC comes back to the step S2 where, a USB attachment is generated on the D+ line trough the communication interface IN. The corresponding change of voltage on D+ line trigs a USB Reset on the D+ line at step S3. When the device SC detects the Reset on D+ line, the pull up resistor P2 is activated on the device SD side at step S4 since the current communication mode of the USB device is USB 2.0. When the device SC detects the Reset on D+ a timer TR is also started on the device SC side at step S5. According to USB 2.0 standard a SET_ADDRESS is by the personal computer. The SET_ADDRESS request contains a USB descriptor which is sent on the D+ line. At step S6, the device checks if a USB descriptor has been received from the connected host. Since a USB descriptor has been received at step S6, the timer TR is stopped at step S9. After the step S9, the device SC has communication settings adapted to the USB 2.0 standard and may work with the connected personal computer.

When the USB device SC is plugged into a handset the device SC generates a USB attachment on the D+ line through the communication interface IN by adding pull up P1. The corresponding change of voltage on D+ line trigs a USB Reset on the host machine HM side. The host machine HM sets the D+ line to a low level at step S3 and removes its RDP pull down resistor. When the device SC detects the Reset on D+ line, a pull up resistor P2 is activated on the device SD side at step S4 and a timer TR is started on the device SC side at step S5. Only the pull up resistor RPU1 + RPU2 is used to polarize D+ line. As a consequence, the handset detects a correct level on the D+ line. Then the handset sends USB requests to the device SC. According to USB-InterChip standard a SET_ADDRESS is sent by the handset. The SET_ADDRESS request contains a USB descriptor which is sent on the D+ line. At step S6, the device checks if a USB descriptor has been received from the connected handset. Since a USB descriptor has been received at step S6, the timer TR is stopped at step S9. After the step S9, the device SC may correctly work with the connected handset.

If the USB device SC is able to communicate in USB low-speed mode, the device SC can behave according to an example similar to that of Figure 2 by replacing D+ line by D- line.

## Claims

1. A USB device (SC) intended to be connected to a host machine (HM), said USB device (SC) being intended to be in first and second communication modes (FM, SM), said USB device (SC) comprising:
- a microprocessor (MP),
- a communication interface (IN) able to manage a Vbus line and a D+ and/or a D- line,
- an operating system (OS),
- a working memory (MEM1),
- a non volatile memory (MEM2), intended to comprise a preset duration (PD),
- a timer (TR),
- first means (M1) for activating a first pull up resistor (P1) on said D+ or D- line when the USB device (SC) is set to the first communication mode (FM),
**characterized in that** said USB device (SC) comprises:
- second means (M2) for starting the timer (TR) when a USB reset is detected on the D+ or D- line,
- third means (M3) for switching said USB device (SC) to the second communication mode (SM) when the timer (TR) reaches the preset duration (PD),
- fourth means (M4) for activating a second pull up resistor (P2) on said D+ or D- line when the USB device (SC) is set to said second communication mode (SM).

2. A USB device (SC) according to claim 1, wherein said USB device (SC) comprises a fifth means (M5) for stopping the timer (TR) when a USB descriptor is detected on the D+ line.

3. A USB device (SC) according to one of claims 1 to 2, wherein said first communication mode (FM) corresponds to USB-InterChip standard and wherein said second communication mode (SM) corresponds to USB 2.0 standard.

4. A USB device (SC) according to one of claims 1 to 3, wherein said USB device (SC) has a default mode corresponding to the first communication mode (FM).

5. A USB device (SC) according to one of claims 1 to 4, wherein said USB device (SC) is a Universal integrated Circuit Card.

6. A method of managing a USB device (SC) comprising a preset duration (PD), a timer (TR) and a communication interface (IN) able to manage a Vbus line and a D+ and / or D- line, said method comprising the following step:
a) when a USB Reset is detected on the D+ or D-line, activating (S4) a first pull up resistor (P1) on said D+ or D- line if the USB device (SC) is set to a first communication mode (FM),
**characterized in that** said method comprises the further steps:
b) when a USB Reset is detected on the D+ or D-line, starting (S5) the timer (TR),
c) switching (S8) said USB device (SC) to a second communication mode (SM) when the timer (TR) reaches said preset duration (PD),
d) when a USB Reset is detected on the D+ or D-line, activating (S4) a second pull up resistor (P2) on said D+ or D- line if the USB device (SC) is set to said second communication mode (SM).

7. A method according to claim 6, wherein the method comprises the further step of stopping (S9) the timer (TR) when a USB descriptor is detected on D+ or D- line.

8. A method according to one of claims 6 to 7, wherein said first communication mode (FM) corresponds to USB-InterChip standard and wherein said second communication mode (SM) corresponds to USB 2.0 standard.
